# EUROPÄISCHE PATENTSCHRIFT

(11) **EP 0 728 061 B1**
(45) Veröffentlichungstag und Bekanntmachung des Hinweises auf die Patenterteilung: **25.02.1998**
(21) Anmeldenummer: 94930921.5
(22) Anmeldetag: 22.10.1994
(51) Int. Cl.: B26B 13/12, F16C 11/10

(54) **SCHERE, INSBESONDERE FRISEURSCHERE**
SCISSORS, ESPECIALLY HAIRCUTTING SCISSORS
CISEAUX, NOTAMMENT CISEAUX DE COIFFEUR

(30) Priorität: 09.11.1993 DE 4338235; 02.07.1994 DE 4423320
(43) Veröffentlichungstag der Anmeldung: 28.08.1996
(73) Patentinhaber: "JAGUAR" STAHLWARENFABRIK GMBH & CO. KG, D-42653 Solingen (DE)
(72) Erfinder: SCHMIDT, Hardi, D-42653 Solingen (DE)
(74) Vertreter: Lippert, Hans-Joachim, Dipl.-Ing.
(86) Internationale Anmeldenummer: DE9401247
(87) Internationale Veröffentlichungsnummer: WO9513168

(56) Entgegenhaltungen:
- WO-A-89/01392
- DE-A- 3 312 945
- DE-C- 207 626
- DE-U- 8 716 229
- FR-A- 582 786
- GB-A- 2 181 484
- US-A- 919 211
- US-A- 4 882 959
- US-A- 4 901 439

## Beschreibung

Die Erfindung betrifft eine Schere, insbesondere Friseurschere, mit zwei Scherenblättern, die durch ein Gewerbe gelenkig miteinander verbunden sind, und zwei Scherenhalmen, von denen jeder zwei Halmteile aufweist, wobei das erste Halmteil mit einem zugeordneten Scherenblatt verbunden ist und das zweite Halmteil das Griffende des Scherenhals einschließt und die beiden jeweiligen Halmteile zur Verschwenkung in der Halmebene gelenkig miteinander verbunden sind.

Eine derartige Schere ist aus der DE-PS 74 279 bekannt. Es handelt sich dabei um eine zusammenklappbare Schere, wobei an dem jeweiligen zweiten Halmteil eine Feder angebracht ist, welche sich beim Aufklappen der Halmteile in kleine, an dem jeweiligen ersten Halmteil vorgesehene Einkerbungen hineinlegt und so die beiden Halmteile fest verbindet.

Eine andere Schere der eingangs genannten Art zeigt die FR 582 786.

Insbesondere bei beruflich häufig benutzten Scheren, wie z. B. Friseurscheren, ist es aus ergonomischen Gründen wünschenswert, die Lage der Griffaugen im Bezug auf die Richtung der Scherenblätter und den Abstand der Griffaugen voneinander den jeweiligen anatomischen und durch die Arbeitsweise bedingten Gegebenheiten der die Schere benutzenden Person anzupassen. Übliche Friseurscheren führen häufig zu einer unnatürlichen Haltung des Arms oder Beugung der Hand. Dies kann leicht zu Verkrampfungen führen. Zum Ausgleich wird dann, wie man in der Praxis beobachten kann, eine Beugung in der Hüfte oder in den Knien durchgeführt. Diese typische Friseur-Arbeitshaltung kann jedoch, insbesondere auf Dauer, zu Gesundheitsstörungen und -schäden, unter anderem Wirbelsäulenschäden, führen.

Der Erfindung liegt daher die Aufgabe zugrunde, eine Schere, insbesondere Friseurschere, zu schaffen, die eine ergonomische Anpassung an unterschiedliche anatomische Gegebenheiten und Arbeitsweisen in der Praxis gewährleistet.

Die Aufgabe wird erfindungsgemäß dadurch gelöst, daß die Schere nach der eingangs genannten Art ausgebildet ist, wobei die jeweiligen ersten und zweiten Halmteile in verschiedenen Winkelstellungen zueinander arretierbar sind und die Arretierung in der Gelenkverbindung der Halmteile erfolgt.

Aufgrund der erfindungsgemäßen Konstruktion lassen sich die Scherenhalme in ihrer Winkelstellung gegenüber den Scherenblättern individuell einstellen, so daß die Lage der Griffaugen zur Richtung der Scherenblätter und der Abstand der Griffaugen voneinander ergonomisch den anatomischen Voraussetzungen und der Arbeitsweise der die Schere benutzenden Person angepaßt werden kann. Insbesondere kann die Schere sowohl auf einen Rechts- als auch auf einen Linkshänder optimal eingestellt werden. Sie kann weiterhin an die Größe der Hand und der Finger der die Schere benutzenden Person angepaßt werden, um Verkrampfungen der Handmuskulatur vorzubeugen. Schließlich erlaubt die erfindungsgemäße Schere auch eine natürliche Haltung des Arms und/oder Beugung der Hand der jeweiligen Person während der Arbeit.

Eine Arretierung der Halmteile eines Scherenhalms über einen bestimmten Winkelbereich ist zwar aus der US 919,211 bekannt. Zur Arretierung über einen bestimmten Winkelbereich weist das das Griffauge für den Daumen tragende zweite Halmteil einen seitlich stark ausgebeulten Bereich mit einem konzentrisch bezüglich der Gelenkverbindung der beiden Halmteile gebogenen Schlitz auf. Durch diesen Schlitz hindurch erstreckt sich eine am ersten Halmteil angeordnete Klemmschraube zur Arretierung der beiden Halmteile in einer gewählten Winkelposition.

Die Winkeleinstellung bei nur einem Scherenhalm und die zur Arretierung der beiden Halmteile vorgesehene Vorrichtung sind insbesondere bei Friseurscheren zur Lösung der vorstehenden Aufgabe nicht geeignet. Der beulenförmige Bereich kann kaum so gestaltet werden, daß bei verschiedenen Winkeleinstellungen des zweiten Halmteils ein genauer und konstanter Anschlag gewährleistet wird, der insbesondere bei Präzisionsscheren erforderlich ist, um die Schere korrekt schließen zu können, ohne daß sich die Scherenblätter überkreuzen. Auch können sich Haare um den ausgebeulten Bereich und in dem Schlitz leicht festsetzen. Ferner ist die Verschwenkbarkeit des zweiten Halmteils durch die Länge des Schlitzes begrenzt. Schließlich läßt sich die Verschwenkvorrichtung nicht ohne weiteres auf den zweiten, längeren Scherenhalm übertragen. Sie würde an diesem Halm, der als Fingerauflage dient, auch als störend empfunden.

Eine andere Schere, bei der die Scherenhalme gegenüber den Scherenblättern verschwenkbar sind, ist aus der DE-OS 26 49 157 bekannt. Bei dieser Schere sind auf einem Nocken, der sich durch die Gewerbeöffnungen der beiden Scherenblätter erstreckt, die beiden Scherenhalme verschwenkbar gegenüber den beiden Scherenblättern angeordnet. Dazu weist der Nocken an seinen Stirnseiten gegenüberliegende, exzentrisch angeordnete Vorsprünge auf, die durch Bohrungen in den beiden Scherenhalmen greifen. Die Vorsprünge sind stirnseitig mit Gewindebohrungen versehen, die mit Schrauben an beiden Seiten der Schere in Eingriff stehen, die die Scherenhalme und die dazwischenliegenden Scherenblätter kraftschlüssig gegeneinander festlegen. Mit Hilfe eines seitlich an einem Scherenhalm angeordneten Mitnehmers, der über eine der Schrauben mit dem Nocken verbunden ist, kann dieser um die Achse der exzentrischen Vorsprünge verschwenkt werden. Dadurch werden die beiden Scherenblätter, die zur Scherenspitze hin an den Scherenhalmen durch nach innen gerichtete Vorsprünge der Scherenhalme, die in Langlöcher der Scherenblätter greifen, gelagert sind, gegenüber den Scherenhalmen verschwenkt.

Aufgrund der konstruktionsbedingten Lagerung der Scherenblätter um den Nocken, auf dem sie durch die seitlich darüber angeordneten Scherenhalme zusammengehalten werden, und die Lagerung der Langlöcher in den Scherenblättern an den Vorsprüngen der Scherenhalme kann eine präzise und stabile Lagerung der beiden Scherenblätter in bezug auf die beiden Scherenhalme nicht erreicht werden. Da mehrere Teile im Gewerbe der Schere zusammengehalten werden, weist dieses ein relativ großes Spiel auf. Auch das zur Lagerung der Vorsprünge der Scherenhalme in den Langlöchern der Scherenblätter notwendige Spiel trägt dazu bei, daß sich die Scherenblätter bei festgehaltenen Scherenhalmen schon bei geringer Kraftbeaufschlagung gegeneinander bewegen lassen. Eine präzise und stabile Lagerung und Führung der Scherenblätter ist daher weder in der Schneidebene noch in senkrechter Richtung dazu gegeben. Selbst wenn dieser Nachteil etwa für Papier- oder Textilscheren keine große Rolle spielt, so macht er sich bei höherwertigen Scheren um so stärker bemerkbar. Von einer Qualitätsschere, z. B. einer Friseurschere, wird eine höchst präzise und stabile Führung der Scherenblätter mit einem einwandfreien Schließdruck verlangt. Die Verwendung des aus der japanischen Patentanmeldung bekannten Prinzips auf eine solche Schere würde daher den Qualitätsstandard nicht erfüllen.

Außerdem wäre es schwierig oder sogar unmöglich, den aus der japanischen Patentanmeldung bekannten Verschwenkmechanismus auf eine schmal und schlank konstruierte Schere, wie z. B. eine Friseurschere, zu übertragen. Eine dazu notwendige Verkleinerung des Nockens würde die Stabilität und Präzision einer solchen Schere eher noch verschlechtern.

In einer bevorzugten Ausführung der Erfindung sind die beiden Halmteile durch eine Schrauben-Mutter-Verbindung miteinander verbunden und zueinander arretierbar. Alle geeigneten Arten einer solchen Verbindung kommen dabei in Betracht.

Insbesondere kann die Schrauben-Mutter-Verbindung so ausgebildet sein, daß die Mutter mit einem Ansatz verdrehungssicher in einer Durchgangsöffnung in einem der Halmteile angeordnet ist und der Endbereich des Ansatzes sich in eine Durchgangsöffnung in dem anderen Halmteil erstreckt, mit einer Länge, die geringer als die Dicke dieses Halmteils ist, und dieser Halmteil drehbar um den Endbereich des Ansatzes der Mutter angeordnet ist.

In einer anderen bevorzugten Ausführung weisen die beiden Halmteile jedes Scherenhalms an ihren gelenkig miteinander verbundenen Enden zueinander fluchtende und sich zum Schraubenkopf hin konisch verjüngende Durchgangsöffnungen auf, wobei die Mutter, entsprechend konisch ausgebildet, in den Durchgangsöffnungen angeordnet ist.

Zweckmäßigerweise sind ein oder mehrere Sicherungsringe als Drehsicherung für die Mutter und die Halmteile vorgesehen. Eine alternative oder zusätzliche Drehsicherung für die Mutter kann durch eine im Innern der Mutter ausgebildete Ringnut erreicht werden, in der ebenfalls ein Sicherungsring aus flexiblem Material angeordnet ist und die Schraube beaufschlagt.

Die beiden gelenkig miteinander verbundenen Enden der beiden Halmteile jedes Scherenhalms können als einfaches Scharnier ausgebildet sein. Zur Erhöhung der Stabilität und der Arretierungsfläche im Gelenkbereich der Halmteile wird bevorzugt eine gabelförmige Gelenkverbindung verwendet.

Anstelle einer Schrauben-Mutter-Verbindung zwischen dem ersten und zweiten Halmteil eines jeden Scherenhalms kann auch eine einfache Schraubenverbindung der Halmteile zweckmäßig sein. In diesem Fall kann sich die Schraube verdrehbar durch eine Bohrung in einem der beiden Halmteile erstrecken und mit einem Gewindeende mit einer in dem anderen Halmteil vorgesehenen Gewindebohrung im Eingriff stehen. Durch Anziehen der Schraube werden die beiden Halmteile kraftschlüssig gegeneinander festgelegt.

Anstelle einer Schraube kann ebenso ein Bolzen zur Herstellung einer geeigneten Gelenkverbindung verwendet werden. In einer bevorzugten Ausführung erstreckt sich der Bolzen durch Bohrungen in den Halmteilen und steht aus diesen mit seinem dem Kopf gegenüberliegenden Ende vor. An dem vorstehenden Ende ist quer zur Längsachse des Bolzens ein Hebel mit einer an einer oder beiden Seiten des Bolzens angeordneten Exzenterkurve gelagert, die die angrenzende Seite des Halmteils beaufschlagt. Durch Verschwenken des Hebels vorzugsweise in eine parallel zu den beiden Halmteilen gerichtete Stellung werden die beiden Halmteile zwischen der Exzenterkurve und dem Kopf des Bolzens kraftschlüssig gegeneinander festgelegt.

Um die beiden Halmteile in der festgelegten Winkeleinstellung besser arretieren zu können, ist es zweckmäßig, die sich um die Bohrungen für die Schrauben bzw. Bolzen herum erstreckenden, gegenüberliegenden Flächen der beiden Halmteile zumindest teilweise mit komplementär zueinander ausgebildeten, kreisringförmigen Rändelungen zu versehen.

In einer weiteren bevorzugten Ausführung der Erfindung weisen die beiden Halmteile jedes Scherenhalms an ihren gelenkig miteinander verbundenen Enden zueinander fluchtende und sich konisch verjüngende Durchgangsöffnungen auf, die zumindest teilweise mit einer Rändelung versehen sind und durch die sich ein entsprechend konisch ausgebildetes Teil mit einer komplementären Rändelung erstreckt, das mit Hilfe einer Feder in der Eingriffsposition mit den Durchgangsöffnungen vorgespannt ist und durch Druck oder Zug aus dieser Eingriffsposition lösbar ist.

Insbesondere kann dazu das konisch ausgebildete Teil an seinem den kleineren Querschnitt aufweisenden Ende ein am betreffenden Halmteil vorstehendes Druckteil aufweisen und die Feder an ihrem einen Ende am Druckteil und mit ihrem anderen Ende an dem betreffenden Halmteil festgelegt sein.

Die erfindungsgemäße Schere kann weitgehend der Form einer normalen Schere angepaßt werden. So können die beiden ersten, mit den Scherenblättern verbundenen Halmteile so gestaltet und angeordnet sein, daß die Gelenkverbindungen zwischen den beiden Halmteilen bei geschlossener Schere übereinander angeordnet sind. Dabei sind die zum Lösen der Arretierung vorgesehenen Teile, Schrauben oder Muttern, an den Außenseiten der Scherenhalme angeordnet, so daß sie bei geschlossener Schere zugänglich sind. Andererseits können die beiden ersten, mit den Scherenblättern verbundenen Halmteile auch schon in einem Winkel zu den Scherenblättern angeordnet sein, so daß die Gelenkverbindungen zwischen den Halmteilen bei geschlossener Schere nebeneinander angeordnet sind.

Einige Ausführungsbeispiele der Erfindung werden im folgenden anhand der Zeichnung näher beschrieben. In der Zeichnung zeigen:
- Fig. 1: ein Ausführungsbeispiel mit in der Schließlage der Schere übereinander angeordneten Gelenkverbindungen zwischen den ersten und zweiten Halmteilen,
- Fig. 2: einen Schnitt durch die übereinander angeordneten Gelenkverbindungen gemäß Fig. 1,
- Fig. 3: eine insbesondere den Sicherungsring hervorhebende Draufsicht auf den Gelenkbereich des in Fig. 2 innen liegenden Halmteils,
- Fig. 4: ein zweites Ausführungsbeispiel mit einem neben dieser Figur gezeichneten auswechselbaren zweiten Halmteil mit Fingerhaken,
- Fig. 5: ein drittes Ausführungsbeispiel,
- Fig. 6: eine auseinandergezogene Darstellung teilweise im Schnitt durch die Gelenkverbindung zwischen einem ersten und zweiten Halmteil der Schere nach Fig. 5,
- Fig. 7: eine Draufsicht auf die beiden Gelenkbereiche der nebeneinander angeordneten Halmteile gemäß Fig. 6,
- Fig. 8: eine andere Ausführung der Gelenkverbindung teilweise im Schnitt,
- Fig. 9: eine Draufsicht auf den Gelenkbereich des in Fig. 8 unten dargestellten Halmteils,
- Fig. 10: eine alternative Ausführung der Gelenkverbindung zwischen einem ersten und zweiten Halmteil teilweise im Schnitt,
- Fig. 11: eine weitere Ausführung der Gelenkverbindung zwischen einem ersten und zweiten Halmteil im Schnitt und
- Fig. 12: eine Draufsicht auf die Gelenkverbindung gemäß Fig. 11.
- Fig. 13: einen teilweisen Schnitt durch die Gelenkverbindung eines vierten Ausführungbeispiels,
- Fig. 14: einen teilweisen Schnitt durch die Gelenkverbindung eines fünften Ausführungsbeispiels und
- Fig. 15: eine Ansicht der in Fig. 14 dargestellten Gelenkverbindung von oben bei abgeschraubtem Druckteil.

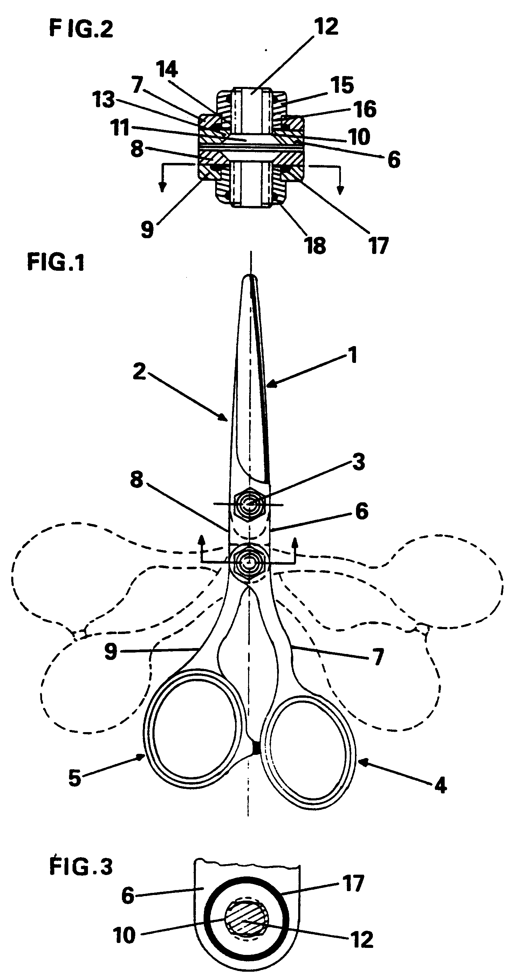

In Fig. 1 sind die beiden Scherenblätter der Schere mit 1 und 2 bezeichnet, die durch ein Gewerbe 3 gelenkig miteinander verbunden sind und sich jenseits des Gewerbes 3 in Scherenhalme 4 und 5 fortsetzen. Jeder Scherenhalm 4 bzw. 5 besteht aus zwei Halmteilen 6 und 7 bzw. 8 und 9, wobei das erste Halmteil 6 bzw. 8 mit dem zugeordneten Scherenblatt 1 bzw. 2 verbunden ist und das zweite Halmteil 7 bzw. 9 das Griffende des Scherenhalms 4 bzw. 5 einschließt. Die beiden Halmteile 6 und 7 bzw. 8 und 9 sind zur Verschwenkung in der Halmebene gelenkig miteinander verbunden und in verschiedenen Winkelstellungen zueinander arretierbar.

Die gelenkige Verbindung zwischen den beiden Halmteilen 6 und 7 bzw. 8 und 9 besteht bei den in den Figuren 1 bis 7 dargestellten Ausführungsbeispielen aus Schrauben-Mutter-Verbindungen.

Wie näher aus Fig. 2 hervorgeht, sind für die Schrauben-Mutter-Verbindung bei der in Fig. 1 dargestellten Schere eine Bohrung 10 im Halmteil 6 bzw. 8, die sich zur Aufnahme des Kopfes 11 einer Senkkopfschraube 12 in eine Senkbohrung 13 fortsetzt, und eine Bohrung 14 mit größerem Radius in dem anderen Halmteil 7 bzw. 8 vorgesehen, in die die Mutter 15 mit einem Ansatz 16 hineingreift.

Als Drehsicherung für die Mutter 15 und die beiden Halmteile 6 und 7 bzw. 8 und 9 sind Sicherungsringe 17 und 18 vorgesehen. Der Sicherungsring 17 ist in einer ringförmigen Erweiterung der Bohrung 14 im zweiten Halmteil 7 bzw. 9 an dem zum Ansatz 16 der Mutter 15 weisenden Ende angeordnet. Beim Anziehen der Mutter 15 beaufschlagt der Sicherungsring 17 die beiden Halmteile 6 und 7 bzw. 8 und 9 sowie die Mutter 15 am Ende ihres Ansatzes 16. Der zweite Sicherungsring 18 sitzt in einer an der Innenseite der Mutter 15 eingeformten Ringnut. Er beaufschlagt daher die Mutter 15 und die Senkkopfschraube 12.

Wie aus den Figuren 1 und 2 hervorgeht, sind die beiden ersten mit den Scherenblättern 1 und 2 verbundenen Halmteile 6 und 8 so geformt, daß sie eine Fortsetzung der beiden Scherenblätter 1 und 2 bilden. Bei geschlossener Schere sind daher die Gelenkverbindungen zwischen den Halmteilen 6, 7 und 8, 9 übereinander angeordnet. Durch Lösen der Muttern 15 der Gelenkverbindungen können die zweiten Halmteile 7 und 9 gegenüber der Achse der Scherenblätter 1 und 2 nach beiden Seiten in der Halmebene verschwenkt werden. In der unter den jeweiligen Bedingungen ergonomisch günstigen Winkeleinstellung können dann die zweiten Halmteile 7 und 9 durch Festziehen der Muttern 15 wieder arretiert werden.

Wie in Fig. 2 gezeigt ist, sind die Köpfe 11 der Senkkopfschrauben 12 bei geschlossener Schere gegenüberliegend angeordnet. Die Senkbohrungen 13 korrespondieren zu den Köpfen 11, so daß die Oberseiten der Senkkopfschrauben 12 zu den gegenüberliegenden Seiten der Halmteile 6 und 8 fluchten. Auf diese Weise werden glatte gegenüberliegende Flächen gebildet.

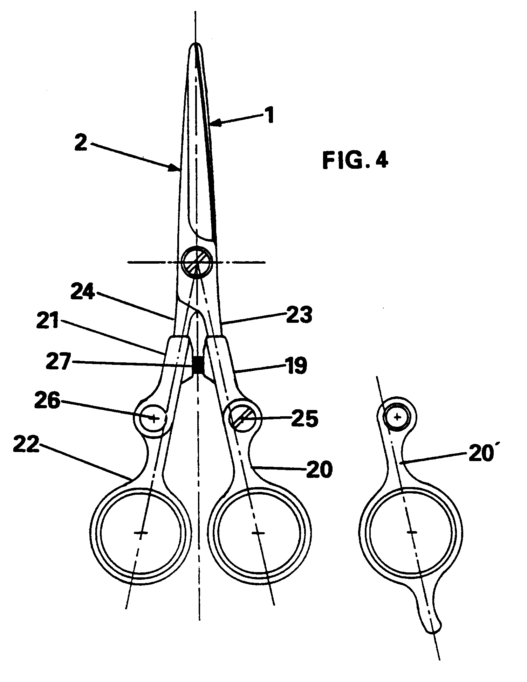

Während bei der in Fig. 1 dargestellten Schere die beiden ersten, eine Fortsetzung der Scherenblätter 1 und 2 bildenden Halmteile 6 und 8 und die zweiten Halmteile 7 und 9 aus Stahl gefertigt sind, bestehen die betreffenden ersten und zweiten Halmteile 19, 21 und 20, 22 der in Fig. 4 gezeigten Schere aus Kunststoff. Die ersten Halmteile 19 und 21 sind auf Fortsätzen 23 und 24 der Scherenblätter 1 und 2 befestigt. Die Fortsätze 23 und 24 bzw. ersten Halmteile 19 und 21 sind in einem Winkel zu den Scherenblättern 1 und 2 angeordnet, so daß die Gelenkverbindungen zwischen den ersten und zweiten Halmteilen 19, 20 und 21, 22 bei geschlossener Schere nebeneinanderliegen.

Als Gelenkverbindungen zwischen den ersten und zweiten Halmteilen 19, 20 und 21, 22 dient eine Schrauben-Mutter-Verbindung. Durch Festziehen der Schrauben 25 auf den Muttern 26 lassen sich die ersten und zweiten Halmteile 19, 20 und 21, 22 aneinander arretieren.

Zwischen den ersten Halmteilen 19 und 21 sind Ansätze 27 vorgesehen, die ein Überkreuzen der Spitzen der Scherenblätter 1 und 2 beim Verstellen der zweiten Halmteile 20 und 22 und eine damit verbundene Verletzungsgefahr vermeiden.

Das zur Fingerauflage bestimmte zweite Halmteil 20 kann aufgrund der lösbaren Verbindung mit dem ersten Halmteil 19 auf einfache Weise gegen ein anderes ausgetauscht werden. So besteht die Möglichkeit, ein mit einem Fingerhaken versehenes zweites Halmteil 20' oder ein Halmteil mit engerem oder breiterem Griffauge aus ergonomischen Gründen einzusetzen.

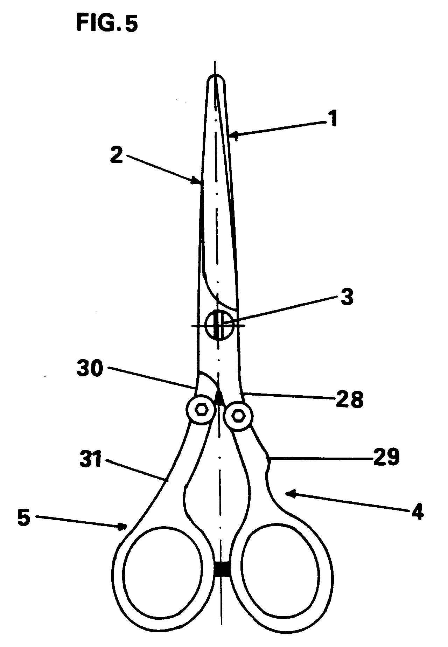

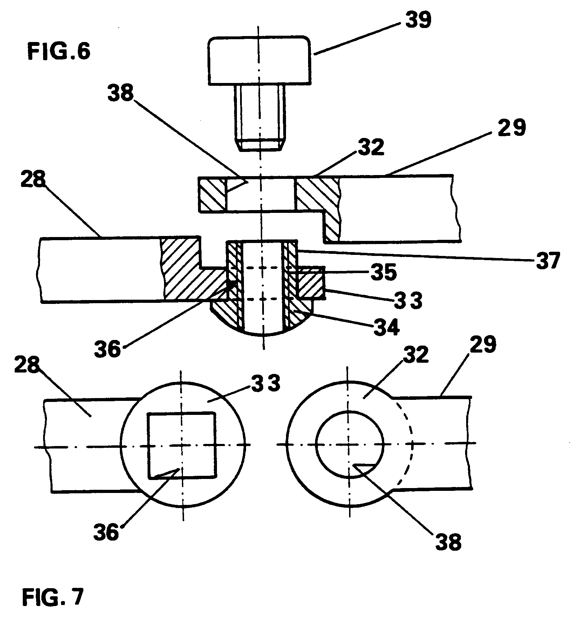

Die in Fig. 5 dargestellte Schere verwendet wiederum aus Stahl hergestellte erste und zweite Halmteile 28, 29 und 30, 31, wobei die ersten Halmteile 28 und 30 als Fortsetzung der Scherenblätter 1 und 2 ausgebildet sind. Die Gelenkverbindungen zwischen den beiden Halmteilen 28, 29 und 30, 31 sind in den Figuren 6 und 7 gezeigt.

Die beiden Halmteile 28 und 29 bzw. 30 und 31 weisen an ihren gelenkig miteinander verbundenen Enden komplementär zueinander ausgebildete Bereiche 32 und 33 geringerer Dicke auf, die ein einfaches Scharnier bilden. Die Dicke der beiden Halmteile 28 und 29 bzw. 30 und 31 in den Bereichen 32 und 33 entspricht zusammengenommen etwa der Dicke jedes Halmteils 28, 29, 30, 31 in den übrigen Bereichen, so daß die einander angrenzenden Seitenflächen der Halmteile 28, 29 bzw. 30, 31 zueinander fluchten. Die beiden Halmteile 28 und 29 bzw. 30 und 31 sind durch eine Schrauben-Mutter-Verbindung gelenkig und arretierbar miteinander verbunden.

Die Mutter 34 ist mit einem Ansatz 35 in einer Durchgangsöffnung 36 im Halmteil 28 angeordnet. Der Endbereich 37 des Ansatzes 35 erstreckt sich in eine Durchgangsöffnung 38 im Halmteil 29 mit einer Länge, die geringer ist als die Dicke des Bereichs 32 dieses Halmteils 29. Das Halmteil 29 ist drehbar um den Endbereich 37 des Ansatzes 35 der Mutter 34 angeordnet.

Wie aus Fig. 7 hervorgeht, wird die verdrehsichere Anordnung der Mutter 34 in der Durchgangsöffnung 36 des Halmteils 28 dadurch erreicht, daß der Ansatz 35 der Mutter 34 im Bereich der Durchgangsöffnung 36 einen zum Querschnitt der Durchgangsöffnung 36 korrespondieren quadratischen Querschnitt aufweist. Die Bereiche 32 und 33 an den Gelenkenden der Halmteile 29 bzw. 28 sind zur Aufnahme der Durchgangsöffnungen 38 bzw. 36 kreisförmig ausgebildet.

Durch Festziehen der Schraube 39 in der verdrehsicher sitzenden Mutter 34 werden die beiden Halmteile 28 und 29 in der gewählten Winkelstellung arretiert.

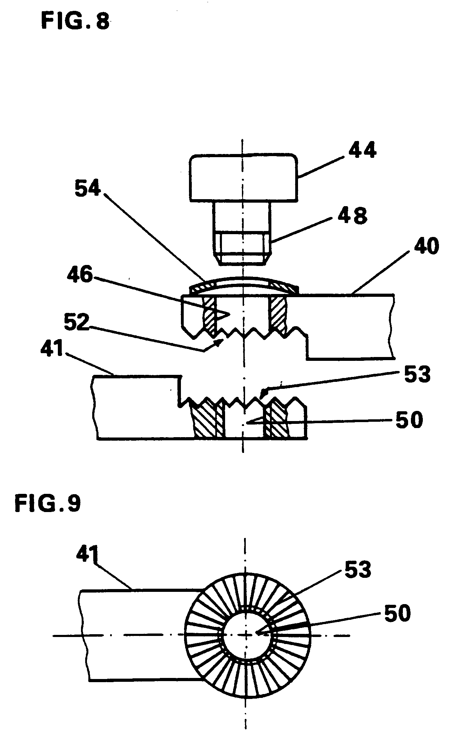

In den durch die Figuren 8, 9 und 10 dargestellten Ausführungsbeispielen werden die beiden Halmteile 40 und 41 bzw. 42 und 43 durch eine Schraube 44 bzw. 45 miteinander verbunden, die sich verdrehbar durch eine Bohrung 46 bzw. 47 in dem Halmteil 40 bzw. 42 erstreckt und mit einem Gewindeende 48 bzw. 49 mit einer in dem anderen Halmteil 41 bzw. 43 vorgesehenen Gewindebohrung 50 bzw. 51 im Eingriff steht. Durch Anziehen der Schraube 44 bzw. 45 sind die beiden verdrehbar angeordneten Halmteile 40 und 41 bzw. 42 und 43 in der gewählten Winkelstellung zueinander arretierbar.

Bei dem in den Figuren 8 und 9 dargestellten Ausführungsbeispiel weisen die beiden sich um die Bohrungen 46 und 50 herum erstreckenden, gegenüberliegenden Flächen der beiden Halmteile 40 und 41 komplementär zueinander ausgebildete, kreisringförmige Rändelungen 52 bzw. 53 auf. Werden diese Rändelungen 52 und 53 in der gewählten Winkeleinstellung in Eingriff gebracht, so kann sich auch bei starker Kraftbeaufschlagung die Winkeleinstellung nicht ändern.

Als zusätzliche Drehsicherung für die Schraube 44 ist ein Federring 54 vorgesehen, der zwischen dem Schraubenkopf und dem Halmteil 40 angeordnet wird.

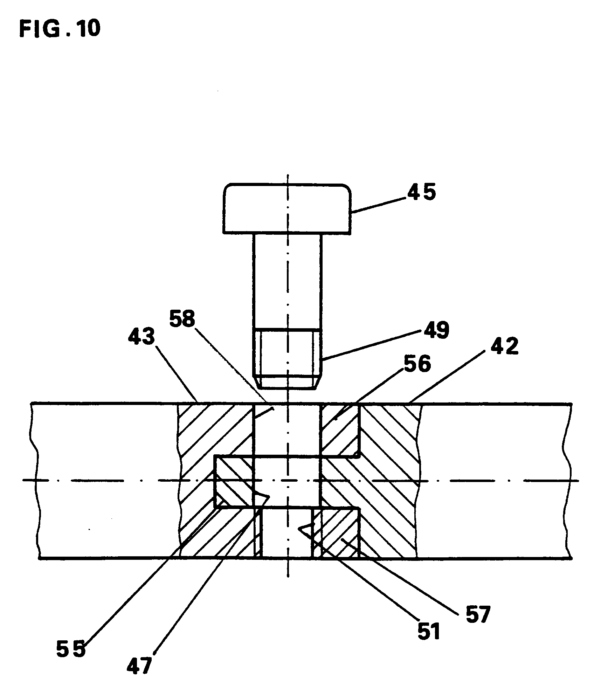

Anstelle des in Fig. 8 dargestellten einfachen Scharniers können auch Scharniere mit ineinandergreifenden Teilen vorgesehen sein. Fig. 10 zeigt ein gabelförmiges Scharnier, bei dem ein mittlerer Endbereich 55 geringerer Dicke des Halmteils 42 zwischen gabelförmig angeordnete Endbereiche 56 und 57 des Halmteils 43 greift. Die Schraube 45 erstreckt sich verdrehbar durch eine Bohrung 58 im Endbereich 56 des Halmteils 43 in die Bohrung 47 des Halmteils 42 und anschließend mit dem Gewindeende 49 in die Gewindebohrung 51 des Endbereichs 57 des Halmteils 43. Durch Festziehen der Schraube 45 werden die beiden Halmteile 42 und 43 in der gewählten Winkelstellung zueinander arretiert.

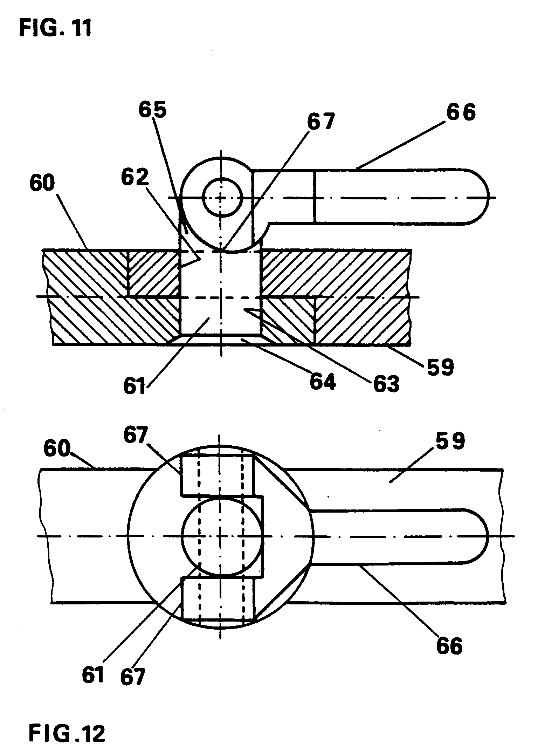

In den Figuren 11 und 12 wird schließlich eine Bolzenverbindung zwischen einem ersten und zweiten Halmteil 59 und 60 dargestellt. Der Bolzen 61 erstreckt sich durch Bohrungen 62 und 63 in den Halmteilen 59 und 60 und steht aus diesen mit seinem dem Kopf 64 gegenüberliegenden Ende 65 vor. An dem vorstehenden Ende 65 ist quer zur Bolzenachse ein Hebel 66 gelagert, der an beiden Seiten der Schwenkachse Exzenterkurven 67 aufweist, die die entsprechende Oberseite des Halmteils 59 beaufschlagen. Durch Verschwenken des Hebels 66 in eine parallel zu den Halmteilen 59 und 60 gerichtete Stellung werden die beiden Halmteile 59 und 60 zwischen dem Kopf 64 des Bolzens 61 und den Exzenterkurven 67 in der gewählten Winkeleinstellung kraftschlüssig gegeneinander festgelegt.

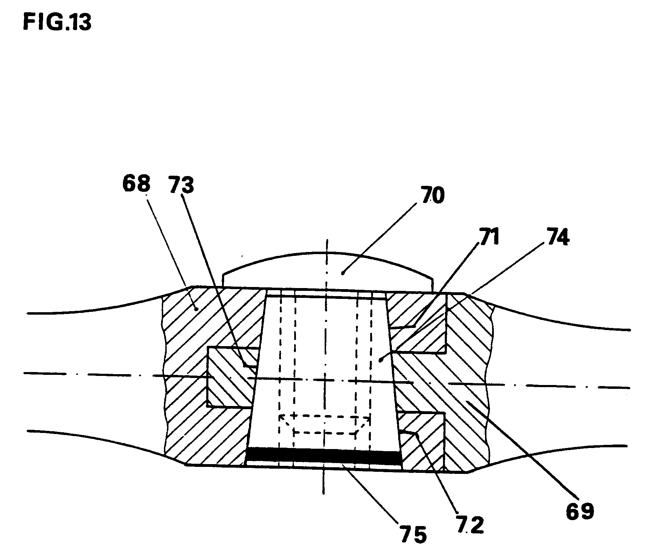

Fig. 13 zeigt ein viertes Ausführungsbeispiel, bei dem die beiden Halmteile 68 und 69 jedes Scherenhalms 4, 5 an ihren in Form eines Gabelgelenks miteinander verbundenen Enden zueinander fluchtende und sich zum Schraubenkopf 70 hin konisch verjüngende Durchgangsöffnungen 71, 72 bzw. 73 aufweisen. Die Mutter 74 ist entsprechend konisch ausgebildet und in den Durchgangsöffnungen 71, 72 bzw. 73 so angeordnet, daß durch Anziehen der Schraube die beiden Halmteile 68 und 69 kraftschlüssig gegeneinander festgelegt werden. Dazu ist die Länge der konisch geformten Mutter 74 so bemessen, daß ein genügend großer Abstand zwischen ihrer Stirnfläche mit geringerem Durchmesser und der Außenfläche des betreffenden Halmteils 68 zum kraftschlüssigen Festziehen der Mutter 74 durch die Schraube gegeben ist.

Als Drehsicherung zwischen der konisch ausgebildeten Mutter 74 und dem gabelförmigen Ende des Halmteils 68 ist ein Sicherungsring 75 aus flexiblem Material vorgesehen.

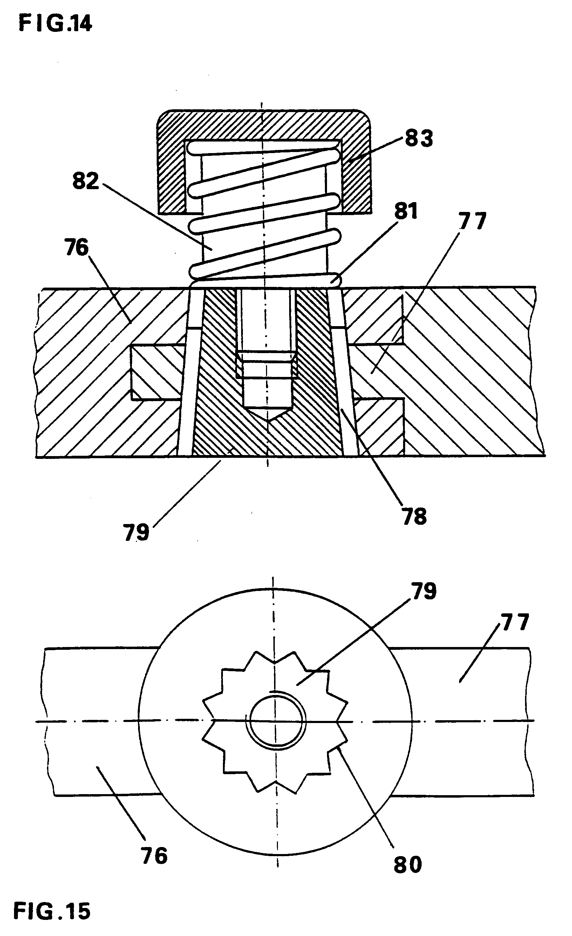

In dem durch die Figuren 14 und 15 dargestellten Ausführungsbeispiel weisen die beiden Halmteile 76 und 77 ebenfalls in ihrem gabelförmig ausgebildeten Scharnierbereich zueinander fluchtende und sich konisch verjüngende Durchgangsöffnungen auf, die über einen größeren Teil ihrer Länge mit einer Rändelung 78 versehen sind. Durch die gerändelten Durchgangsöffnungen erstreckt sich ein entsprechend konisch ausgebildetes Teil 79 mit einer komplementären Rändelung 80. Das gerändelte Teil 79 ist mit Hilfe einer Feder 81 in der Eingriffsposition mit den Durchgangsöffnungen axial vorgespannt.

Dazu weist das konisch ausgebildete Teil 79 an seinem den kleineren Durchmesser aufweisenden Ende ein am betreffenden Halmteil 76 vorstehendes Druckteil 82 in Form eines Knopfes auf, wobei die Feder 81, als Druckfeder ausgebildet, mit ihrem einen Ende gegen die Innenseite eines am freien Ende des Druckteils 82 angeordneten Kopfes 83 und mit ihrem anderen Ende gegen die Außenseite des betreffenden Halmteils 76 im Randbereich der Durchgangsöffnung festliegt.

Das knopfförmige Druckteil 82 ist mit einer Schraubverbindung am konisch ausgebildeten Teil 79 befestigt.

Durch einen Druck auf den Kopf 83 des Druckteils 82 läßt sich das konisch ausgebildete Teil 79 aus der Eingriffsposition mit den Scharnierenden der Halmteile 76 und 77 verschieben, so daß die Halmteile 76 und 77 zueinander verschwenkt werden können. Durch Loslassen des knopfförmigen Druckteils 82 wird dann das konisch ausgebildete Teil 79 in die Eingriffsposition mit den Scharnierteilen der beiden Halmteile 76 und 77 in der gewünschten Winkelposition zurückgezogen, wobei die Rändelung 80 des konisch ausgebildeten Teils 79 mit der Rändelung 78 der Durchgangsöffnung im Scharnier verrastet.

### Bezugszeichenliste

- 1: Scherenblatt
- 2: Scherenblatt
- 3: Gewerbe
- 4: Scherenhalm
- 5: Scherenhalm
- 6: erstes Halmteil
- 7: zweites Halmteil
- 8: erstes Halmteil
- 9: zweites Halmteil
- 10: Bohrung
- 11: Kopf
- 12: Senkkopfschraube
- 13: Senkbohrung
- 14: Bohrung
- 15: Mutter
- 16: Ansatz
- 17: Sicherungsring
- 18: Sicherungsring
- 19: erstes Halmteil
- 20: zweites Halmteil
- 20': zweites Halmteil
- 21: erstes Halmteil
- 22: zweites Halmteil
- 23: Fortsatz
- 24: Fortsatz
- 25: Schraube
- 26: Mutter
- 27: Ansatz
- 28: erstes Halmteil
- 29: zweites Halmteil
- 30: erstes Halmteil
- 31: zweites Halmteil
- 32: Bereich
- 33: Bereich
- 34: Mutter
- 35: Ansatz
- 36: Durchgangsöffnung
- 37: Endbereich
- 38: Durchgangsöffnung
- 39: Schraube
- 40: Halmteil
- 41: Halmteil
- 42: Halmteil
- 43: Halmteil
- 44: Schraube
- 45: Schraube
- 46: Bohrung
- 47: Bohrung
- 48: Gewindeende
- 49: Gewindeende
- 50: Gewindebohrung
- 51: Gewindebohrung
- 52: Rändelung
- 53: Rändelung
- 54: Federring
- 55: Endbereich
- 56: Endbereich
- 57: Endbereich
- 58: Bohrung
- 59: erstes Halmteil
- 60: zweites Halmteil
- 61: Bolzen
- 62: Bohrung
- 63: Bohrung
- 64: Kopf
- 65: Ende
- 66: Hebel
- 67: Exzenterkurve
- 68: erstes Halmteil
- 69: zweites Halmteil
- 70: Schraubenkopf
- 71: Durchgangsöffnung
- 72: Durchgangsöffnung
- 73: Durchgangsöffnung
- 74: Mutter
- 75: Sicherungsring
- 76: erstes Halmteil
- 77: zweites Halmteil
- 78: Rändelung
- 79: konisches Teil
- 80: Rändelung
- 81: Feder
- 82: Druckteil
- 83: Kopf

## Patentansprüche

1. Schere, insbesondere Friseurschere, mit zwei Scherenblättern (1, 2), die durch ein Gewerbe (3) gelenkig miteinander verbunden sind, und zwei Scherenhalmen (4, 5), von denen jeder zwei Halmteile (6, 7; 8, 9; 19, 20; 21, 22; 28, 29; 30, 31; 40, 41; 42, 43; 59, 60; 68, 69; 76, 77) aufweist, wobei das erste Halmteil (6; 8; 19; 21; 28; 30; 40; 42; 59; 68; 76) mit einem zugeordneten Scherenblatt (1; 2) verbunden ist und das zweite Halmteil (7; 9; 20; 22; 29; 31; 41; 43; 60; 69; 77) das Griffende des Scherenhalms (4; 5) einschließt und die beiden jeweiligen Halmteile (6, 7; 8, 9; 19, 20; 21, 22; 28, 29; 30, 31; 40, 41; 42, 43; 59, 60; 68, 69; 76, 77) zur Verschwenkung in der Halmebene gelenkig miteinander verbunden sind, **dadurch gekennzeichnet**, daß die beiden Halmteile (6, 7; 8, 9; 19, 20; 21, 22; 28, 29; 30, 31; 40, 41; 42, 43; 59, 60; 68, 69; 76, 77) in verschiedenen Winkelstellungen zueinander arretierbar sind und die Arretierung in der Gelenkverbindung der Halmteile (6, 7; 8, 9; 19, 20; 21, 22; 28, 29; 30, 31; 40, 41; 42, 43; 59, 60; 68, 69; 76, 77) erfolgt.

2. Schere nach Anspruch 1, **dadurch gekennzeichnet**, daß die beiden Halmteile (6, 7; 8, 9; 19, 20; 21, 22; 28, 29; 30, 31; 68, 69) durch eine Schrauben-Mutter-Verbindung miteinander verbunden und zueinander arretierbar sind.

3. Schere nach Anspruch 2, **dadurch gekennzeichnet**, daß die Mutter (34) mit einem Ansatz (35) verdrehungssicher in einer Durchgangsöffnung (36) in einem der Halmteile (28) angeordnet ist und der Endbereich (37) des Ansatzes (35) sich in eine Durchgangsöffnung (38) in dem anderen Halmteil (29) erstreckt, mit einer Länge, die geringer als die Dicke dieses Halmteils (29) ist, und dieser Halmteil (29) drehbar um den Endbereich (37) des Ansatzes (35) der Mutter (34) angeordnet ist.

4. Schere nach Anspruch 2, **dadurch gekennzeichnet**, daß die beiden Halmteile (68, 69) jedes Scherenhalms (4, 5) an ihren gelenkig miteinander verbundenen Enden zueinander fluchtende und sich zum Schraubenkopf (70) hin konisch verjüngende Durchgangsöffnungen (71, 72, 73) aufweisen und die Mutter (74), entsprechend konisch ausgebildet, in den Durchgangsöffnungen (71, 72, 73) angeordnet ist.

5. Schere nach Anspruch 1, **dadurch gekennzeichnet**, daß die beiden Halmteile (40, 41; 42, 43) durch eine Schraube (44; 45) miteinander verbunden sind, die sich verdrehbar durch eine Bohrung (46; 47) in einem der beiden Halmteile (40; 42) erstreckt und mit einem Gewindeende (48; 49) mit einer in dem anderen Halmteile (41; 43) vorgesehenen Gewindebohrung (50; 51) im Eingriff steht und die beiden Halmteile (40, 41; 42, 43) kraftschlüssig gegeneinander festlegt.

6. Schere nach Anspruch 1, **dadurch gekennzeichnet**, daß die beiden Halmteile (59, 60) durch einen Bolzen (61) miteinander verbunden sind, der sich durch Bohrungen (62, 63) in den Halmteilen (59, 60) erstreckt und aus diesen mit seinem dem Kopf (64) gegenüberliegenden Ende (65) vorsteht und der die beiden Halmteile (59, 60) mit einem eine Exzenterkurve (67) aufweisenden Hebel (66), der an dem vorstehenden Ende (65) quer zur Längsachse des Bolzens (61) gelagert ist, kraftschlüssig gegeneinander festlegt.

7. Schere nach Anspruch 1, **dadurch gekennzeichnet**, daß die beiden gelenkig miteinander verbundenen Enden der beiden Halmteile (42, 43; 68, 69; 76, 77) jedes Scherenhalms (4, 5) als gabelförmiges Scharnier ausgebildet sind.

8. Schere nach einem der Ansprüche 4 - 7, **dadurch gekennzeichnet**, daß die sich um die Bohrungen (46, 50) herum erstreckenden, gegenüberliegenden Flächen der beiden Halmteile (40, 41) zumindest teilweise komplementär zueinander ausgebildete, kreisringförmige Rändelungen (52, 53) aufweisen.

9. Schere nach Anspruch 1, **dadurch gekennzeichnet**, daß die beiden Halmteile (76, 77) jedes Scherenhalms (4, 5) an ihren gelenkig miteinander verbundenen Enden zueinander fluchtende und sich konisch verjüngende Durchgangsöffnungen aufweisen, die zumindest teilweise mit einer Rändelung (78) versehen sind und durch die sich ein entsprechend konisch ausgebildetes Teil (79) mit einer komplementären Rändelung (80) erstreckt, das mit Hilfe einer Feder (81) in der Eingriffsposition mit den Durchgangsöffnungen vorgespannt ist und durch Druck oder Zug aus dieser Eingriffsposition lösbar ist.

10. Schere nach Anspruch 9, **dadurch gekennzeichnet**, daß das konisch ausgebildete Teil (79) an seinem den kleineren Durchmesser aufweisenden Ende ein am betreffenden Halmteil (76) vorstehendes Druckteil (82) aufweist und daß die Feder (81) an ihrem einen Ende am Druckteil (82) und mit ihrem anderen Ende an dem betreffenden Halmteil (76) festgelegt ist.

## Claims

1. Scissors, especially haircutting scissors, with two scissor blades (1, 2) connected to each other in articulated fashion by means of a single pivot (3), and two scissor handles (4, 5), each of which displays two handle sections (6, 7; 8, 9; 19, 20; 21, 22; 28, 29; 30, 31; 40, 41; 42, 43; 59, 60; 68, 69; 76, 77), where the first handle section (6; 8; 19; 21; 28; 30; 40; 42; 59; 68; 76) is connected to its corresponding scissor blade (1; 2) and the second handle section (7; 9; 20; 22; 29; 31; 41; 43; 60; 69; 77) includes the grip end of the scissor handle (4; 5), and where the two corresponding handle sections (6, 7; 8, 9; 19, 20; 21, 22; 28, 29; 30, 31; 40, 41; 42, 43; 59, 60; 68, 69; 76, 77) are connected to each other in articulated fashion for pivoting in the plane of the handle, **characterised in that** the two handle sections (6, 7; 8, 9; 19, 20; 21, 22; 28, 29; 30, 31; 40, 41; 42, 43; 59, 60; 68, 69; 76, 77) can be locked at various angles in relation to each other, this locking taking place at the articulated joint of the handle sections (6, 7; 8, 9; 19, 20; 21, 22; 28, 29; 30, 31; 40, 41; 42, 43; 59, 60; 68, 69; 76, 77).

2. Scissors as per Claim 1, **characterised in that** the two handle sections (6, 7; 8, 9; 19, 20; 21, 22; 28, 29; 30, 31; 68, 69) are connected to each other by a screw-and-nut connection and can be locked in relation to each other.

3. Scissors as per Claim 2, **characterised in that** the nut (34), with a shoulder (35), is arranged in non-rotating fashion in a through-hole (36) in one of the handle sections (28) and end area (37) of the shoulder (35) extends into a through-hole (38) in the other handle section (29) to a depth smaller than the thickness of this handle section (29) and this handle section (29) is located in pivotable fashion about the end area (37) of the shoulder (35) of the nut (34).

4. Scissors as per Claim 2, **characterised in that** the two handle sections (68, 69) of each scissor handle (4, 5) display mutually aligned conical through-holes (71, 72, 73), tapering off towards the screw head (70), on their ends connected to each other in articulated fashion, and the nut (74), which is of corresponding conical shape, is located in the through-holes (71, 72, 73).

5. Scissors as per Claim 1, **characterised in that** the two handle sections (40, 41; 42, 43) are connected to each other by a screw (44; 45), which extends through a bore (46; 47) in one of the two handle sections (40; 42) in rotating fashion and has a threaded end (48; 49) which engages a threaded bore (50; 51) provided in the other handle section 41; 43), thus locking the two handle sections (40, 41; 42, 43) in non-positive fashion.

6. Scissors as per Claim 1, **characterised in that** the two handle sections (59, 60) are connected to each other by a bolt (61) which extends through bores (62, 63) in the handle sections (59, 60) and whose end (65) opposite the head (64) protrudes on the other side and locks the two handle sections (59, 60) in non-positive fashion with a lever (66) displaying an eccentric cam-plate (67) located on the protruding end (65) transverse to the longitudinal axis of the bolt (61).

7. Scissors as per Claim 1, **characterised in that** the two ends of the two handle sections (42, 43; 68, 69; 76, 77) of each scissor handle (4, 5), connected to each other in articulated fashion, are designed in the form of a fork-shaped hinge.

8. Scissors as per one of Claims 4 to 7, **characterised in that** the opposing surfaces of the two handle sections (40, 41) extending around the bores (46, 50) at least partially display annular knurls (52, 53) arranged in complementary fashion to one another.

9. Scissors as per Claim 1, **characterised in that** the ends of the two handle sections (76, 77) of each scissor handle (4, 5), connected to each other in articulated fashion, display conically tapered through-holes aligned with each other and which at least partially display a knurl (78) and through which an appropriately designed conical part (79) with a complementary knurl (80) protrudes, which is pre-tensioned with the help of a spring (81) in the engaged position with the through-holes, and which can be released from this engaged position by pressure or traction.

10. Scissors as per Claim 9, **characterised in that** the end of the conically shaped part (79) with the smaller diameter displays a thrust piece (82) which protrudes from the corresponding handle section (76), and that one end of the spring (81) is in contact with thrust piece (82) and the other end is connected to the corresponding handle section (76).

## Revendications

1. Ciseaux, notamment ciseaux de coiffeur avec deux lames de ciseaux (1, 2) assemblées l'une à l'autre de façon articulée par une charnière (3), et deux branches de ciseaux (4, 5) dont chacune présente deux tronçons de branche (6, 7; 8, 9; 19, 20; 21, 22; 28, 29; 30, 31; 40, 41; 42, 43; 59, 60; 68, 69; 76, 77), le premier tronçon de branche (6; 8; 19; 21; 28; 30; 40; 42; 59; 68; 76) étant relié à une lame de ciseaux adjointe (1; 2) et le deuxième tronçon de branche (7; 9; 20; 22; 29; 31; 41; 43; 60; 69; 77) comportant l'anneau de la branche de ciseaux (4; 5) et les deux tronçons de branche respectifs (6, 7; 8, 9; 19, 20; 21, 22; 28, 29; 30, 31; 40, 41; 42, 43; 59, 60; 68, 69; 76, 77) étant assemblés l'un à l'autre de façon articulée aux fins de leur pivotement dans le plan des branches, ciseaux caractérisés en ce que les deux tronçons de branche (6, 7; 8, 9; 19, 20; 21, 22; 28, 29; 30, 31; 40, 41; 42, 43; 59, 60; 68, 69; 76, 77) peuvent être arrêtés en différentes positions angulaires l'un par rapport à l'autre et que l'arrêt est réalisé dans l'assemblage articulé des tronçons de branche (6, 7; 8, 9; 19, 20; 21, 22; 28, 29; 30, 31; 40, 41; 42, 43; 59, 60; 68, 69; 76, 77).

2. Ciseaux suivant revendication 1, caractérisés en ce que les deux tronçons de branche (6, 7; 8, 9; 19, 20; 21, 22; 28, 29; 30, 31; 68, 69) sont assemblés l'un à l'autre par un ensemble boulon/écrou et qu'ils peuvent être arrêtés l'un par rapport à l'autre.

3. Ciseaux suivant revendication 2, caractérisés en ce que l'écrou (34) est disposé, assuré contre la rotation, avec un appendice (35) dans une ouverture de passage (36) dans un des tronçons de branche (28) et que la zone terminale (37) de l'appendice (35) s'étend dans une ouverture de passage (38) dans l'autre tronçon de branche (29), avec une longueur inférieure à l'épaisseur de ce tronçon de branche (29), et que ce tronçon de branche (29) est disposé de façon à pouvoir pivoter autour de la zone terminale (37) de l'appendice (35) de l'écrou (34).

4. Ciseaux suivant revendication 2, caractérisés en ce que les deux tronçons de branche (68, 69) de chaque branche de ciseaux (4, 5) présentent, à leurs extrémités assemblées de façon articulée, des ouvertures de passage (71, 72, 73) alignées l'une par rapport aux autres et coniquement réduites vers la tête de boulon (70), et que l'écrou (74), de forme conique correspondante, est disposé dans les ouvertures de passage (71, 72, 73).

5. Ciseaux suivant revendication 1, caractérisés en ce que les deux tronçons de branche (40, 41; 42, 43) sont assemblés l'un à l'autre par un boulon (44; 45) qui s'étend de façon à pouvoir tourner à travers un alésage (46; 47) dans un des deux tronçons de branche (40; 42) et qui est en prise, par un bout fileté (48; 49) avec un trou taraudé (50; 51) prévu dans l'autre tronçon (41; 43), avec l'effet de fixer les deux tronçons de branche (40, 41; 42, 43), l'un contre l'autre, en union cinématique de force.

6. Ciseaux suivant revendication 1, caractérisés en ce que les deux tronçons de branche (59, 60) sont assemblés l'un à l'autre par un boulon (61) qui s'étend à travers des alésages (62, 63) dans les tronçons de branche (59, 60) et qui sort de ceux-ci avec son bout (65) opposé à sa tête (64) et qui par un levier (66) présentant une came excentrique (67) et logé transversalement par rapport à l'axe longitudinal du boulon (61) au bout sortant (65) fixe les deux tronçons de branche, l'un contre l'autre, en union cinématique de force.

7. Ciseaux suivant revendication 1, caractérisés en ce que les deux deux bouts assemblés de façon articulée des deux tronçons de branche (42, 43; 68, 69; 76, 77) de chaque branche de ciseaux (4, 5) sont réalisés comme jointure fourchée.

8. Ciseaux suivant une des revendications 4 à 7, caractérisés en ce que les faces opposées s'étendant autour des alésages (46, 50) des deux tronçons de branche (40, 41) présentent des moletages circulaires (52, 53) du moins en partie complémentaires les uns par rapport aux autres.

9. Ciseaux suivant revendication 1, caractérisés en ce que les deux tronçons de branche (76, 77) de chaque branche de ciseaux (4, 5) présentent, à leurs extrémités assemblées de façon articulée, des ouvertures de passage alignées l'une par rapport aux autres et coniquement réduites, ouvertures qui sont du moins en partie pourvues d'un moletage (78) et à travers lesquelles s'étend une pièce (79) de forme conique correspondante ayant un moletage complémentaire (80), laquelle pièce est précontrainte au moyen d'un ressort (81) dans la position de prise avec les ouvertures de passage et qui peut être débloquée de cette position de prise par pression ou par traction.

10. Ciseaux suivant revendication 9, caractérisés en ce que la pièce (79) de forme conique présente, à son extrémité ayant le diamètre plus petit, une pièce de pression (82) sortant du tronçon de branche correspondant (76) et que le ressort (81) est fixé avec un de ses bouts à la pièce de pression (82) et avec son autre bout au tronçon de branche correspondant (76).
